# EUROPÄISCHE PATENTSCHRIFT

(11) **EP 2 657 796 B1**
(45) Veröffentlichungstag und Bekanntmachung des Hinweises auf die Patenterteilung: **11.07.2018**
(21) Anmeldenummer: 13164934.5
(22) Anmeldetag: 23.04.2013
(51) Int. Cl.: G05B 9/02

(54) **Elektrische Schaltungsanordnung**
Electrical circuit assembly
Agencement de circuit électrique

(30) Priorität: 24.04.2012 DE 102012103584
(43) Veröffentlichungstag der Anmeldung: 30.10.2013
(73) Patentinhaber: PHOENIX CONTACT GmbH & Co. KG, 32825 Blomberg (DE)
(72) Erfinder: Pott, Thomas, 33719 Bielefeld (DE); Eilers, Markus, 31812 Bad Pyrmont (DE); Peter, Henry, 37574 Einbeck (DE)
(74) Vertreter: Michalski Hüttermann & Partner Patentanwälte mbB

(56) Entgegenhaltungen:
- EP-A2- 2 017 869
- US-A1- 2010 327 667
- US-A1- 2011 169 345
- US-A1- 2011 276 191

## Beschreibung

Die Erfindung betrifft eine elektrische Schaltungsanordnung zum Schutz einer in diese Schaltungsanordnung integrierten logischen Schaltungseinrichtung, mit einem Versorgungspfad zum elektrischen Verbinden der logischen Schaltungseinrichtung mit einer Spannungsversorgung und mindestens einer Fehlererkennungs-Einheit zum Erkennen von mindestens einer Fehlfunktion der Schaltungsanordnung, insbesondere einer Fehlfunktion der logischen Schaltungseinrichtung.

Derartige Schaltungsanordnungen mit Fehlererkennungs-Einheiten sind bekannt. Mittels der Fehlererkennungs-Einheit wird die Schaltungsanordnung auf interne und/oder externe Fehlfunktionen hin überwacht. Bei einigen Schaltungsanordnungen werden Teile der Schaltungsanordnung nach Erkennen der Fehlfunktion abgeschaltet, d.h. von der Spannungsversorgung getrennt.

Aus der US 2011/276191 A1 ist eine elektrische Schaltungsanordnung zum Schutz einer elektrischen Last dieser Schaltungsanordnung bekannt. Die elektrische Schaltungsanordnung umfasst neben der Last einen Versorgungspfad zum elektrischen Verbinden der elektrischen Last mit einer Spannungsversorgung und mindestens einer Fehlererkennungs-Einheit zum Erkennen von mindestens einer Fehlfunktion der Schaltungsanordnung, wobei in dem Versorgungspfad ein ansteuerbarer Schalter zum Unterbrechen des versorgungspfades angeordnet ist.

Aus den Dokumenten EP 2 017 869 A2, US 2011/169345 A1 und US 2010/327667 A1 sind weitere elektrische Schaltungsanordnungen zum Schutz von elektrischen Komponenten der jeweiligen Schaltungsanordnung bekannt.

Der Erfindung liegt die Aufgabe zu Grunde, eine Schaltungsanordnung anzugeben, bei der die Sicherheit der logischen Schaltungseinrichtung im Fehlerfall auf einfache Weise erhöht ist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Bei der erfindungsgemäßen Schaltungsanordnung ist vorgesehen, dass in dem Versorgungspfad ein ansteuerbarer Schalter zum Unterbrechen des versorgungspfades angeordnet ist, wobei die Fehlererkennungs-Einheit in der logischen Schaltungseinrichtung implementiert ist und -zum Ansteuern des Unterbrechens des Versorgungspfades durch den Schalter in Abhängigkeit der mindestens einen Fehlfunktion- über einen Ansteuerpfad mit dem Schalter signaltechnisch verbunden ist. Die erkannte Fehlfunktion ist insbesondere eine Fehlfunktion der logischen Schaltungseinrichtung.

Die logische Schaltungseinrichtung ist als FPGA (Field Programmable Gate Array) und/oder als Mikrocontroller (µC) ausgebildet.

Solange keine Fehlfunktion innerhalb der Schaltungsanordnung (und insbesondere innerhalb der logischen Schaltungseinrichtung selbst) von der Fehlererkennungs-Einheit erkannt wird, kann die logische Schaltungseinrichtung innerhalb der Schaltungsanordnung ihrer Funktion bzw. Aufgabe nachkommen. Sofern nun eine Fehlfunktion (ein Fehlerfall) seitens der in der logischen Schaltungseinrichtung implementierten Fehlererkennungs-Einheit festgestellt wird, wird der Schalter den Versorgungspfad zwischen logischer schaltungseinrichtung und Spannungsversorgung unterbrechen. Mit dieser Unterbrechung des Versorgungspfades der logischen Schaltungseinrichtung im Fehlerfall können Folgefehler oder eine Summierung der Fehler innerhalb der Schaltungsanordnung vermieden werden.

Durch das Unterbrechen des versorgungspfades wird erfindungsgemäß (zumindest) die logische Schaltungseinrichtung von der Spannungsversorgung getrennt. Ein solcher Schalter ist daher beispielsweise ein Trennschalter, der über den Ansteuerpfad zum Trennen der elektrisch leitenden Verbindung zwischen der logischen Schaltungseinrichtung und der Spannungsversorgung ansteuerbar ist. Durch das Trennen wird die logische Schaltungseinrichtung nicht mehr mit Spannung versorgt. Ein Erneutes Verbinden kann ebenfalls durch ein entsprechendes Signal auf dem Ansteuerpfad mittels des Schalters realisiert sein.

Der ansteuerbare Schalter ist bevorzugt als Leistungs-Transistor, besonders bevorzugt als Leistungs-MOSFET (MOSFET: Metall-Oxid-Halbleiter-Feldeffekttransistor) ausgebildet. Insbesondere weist der Leistungs-Transistor einen kleinen Übergangswiderstand im eingeschalteten Zustand auf. Dadurch werden die Wärmeverluste am Transistor reduziert.

Gemäß einer bevorzugten Ausführungsform der Erfindung ist vorgesehen, dass im Ansteuerpfad eine Ansteuerschaltung zum Ansteuern des Schalters angeordnet ist, die über mindestens eine Steuerleitung signaltechnisch mit der Fehlererkennungs-Einheit verbunden ist. Die Ansteuerschaltung setzt das Ausgangssignal der Fehlererkennungs-Einheit in ein Ansteuersignal für den Schalter um.

Insbesondere ist dabei vorgesehen, dass in der Steuerleitung oder in mindestens einer der Steuerleitungen eine Trennstrecke angeordnet ist. Die Trennstrecke sorgt für eine galvanische Trennung von Fehlererkennungs-Einheit und Schalter. Bevorzugt sind in allen Steuerleitungen Trennstrecken vorgesehen beziehungsweise eine Trennstrecke für alle Steuerleitung vorgesehen. Die Trennstrecke wird insbesondere mittels eines Optokopplers realisiert. Ein Beispiel für einen solchen Optokoppler ist der Optokoppler PC817C.

Gemäß einer weiteren bevorzugten Ausführungsform der Erfindung ist vorgesehen, dass mindestens eine weitere Schaltungseinrichtung der Schaltungsanordnung über den mittels des Schalters unterbrechbaren Versorgungspfad mit Spannung versorgt wird.

Mit vorteil ist vorgesehen, dass der Versorgungspfad ein Hauptversorgungspfad der Schaltungsanordnung ist, der sämtliche elektrische Komponenten, insbesondere alle Schaltungseinrichtungen, der Schaltungsanordnung mit Spannung versorgt. Der Schalter ist dementsprechend ein Hauptschalter zum Trennen der elektrisch leitenden Verbindung zwischen allen elektrischen Komponenten der Schaltungsanordnung und der Spannungsversorgung.

Gemäß einer bevorzugten Ausgestaltung der Erfindung ist vorgesehen, dass der Versorgungspfad weiterhin auch zum elektrischen verbinden von mindestens einer Schnittstelle der Schaltungsanordnung über den Schalter mit der Spannungsversorgung eingerichtet ist. Schnittstellen sind insbesondere alle Arten von analogen und digitalen IOs.

Insbesondere ist dabei vorgesehen, dass die logische Schaltungseinrichtung signaltechnisch mit der Schnittstelle verbunden ist.

Gemäß einer weiteren bevorzugten Ausgestaltung der Erfindung ist vorgesehen, dass die Fehlererkennungs-Einheit auch zum Erkennen von Fehlfunktionen der Schnittstelle eingerichtet ist.

Gemäß einer bevorzugten Ausführungsform der Erfindung ist der ansteuerbare Schalter über den einen Ansteuerpfad und/oder über einen weiteren Ansteuerpfad auch zum Wiederherstellen des Versorgungspfades ansteuerbar.

Insbesondere ist vorgesehen, dass der weitere Ansteuerpfad über die Schnittstelle oder eine der Schnittstellen der Schaltungseinrichtung geführt ist, an die zur Ansteuerung des Wiederherstellens des versorgungspfades ein Steuerausgang der Spannungsversorgung anschließbar ist.

Weist die Schaltungsanordnung die Spannungsversorgung nicht auf, so ist ihr versorgungspfad zumindest mit der Spannungsversorgung elektrisch leitend verbindbar.

Alternativ ist jedoch vorgesehen, dass die Schaltungsanordnung die Spannungsversorgung aufweist.

Bei der als FPGA (Field Programmable Gate Array) und/oder als Mikrocontroller (µC) ausgebildeten logischen Schaltungseinrichtung ist diese insbesondere eine Steuer- und/oder Regelvorrichtung einer Logikeinheit mit mindestens einer Schnittstelle als typische Peripherie, Diese Schnittstelle ist bevorzugt die bereits erwähnte Schnittstelle der Schaltungseinrichtung.

Nachfolgend wird die Erfindung unter Bezugnahme auf die anliegende Zeichnung anhand einer bevorzugten Ausführungsform näher erläutert.

Es zeigen
- Fig. 1: eine Spannungsversorgung und eine elektrische Schaltungsanordnung gemäß einer bevorzugten Ausführungsform der Erfindung und
- Fig. 2: ein Ersatzschaltbild einer Simulation einer Schaltvorrichtung der elektrischen Schaltungsanordnung.

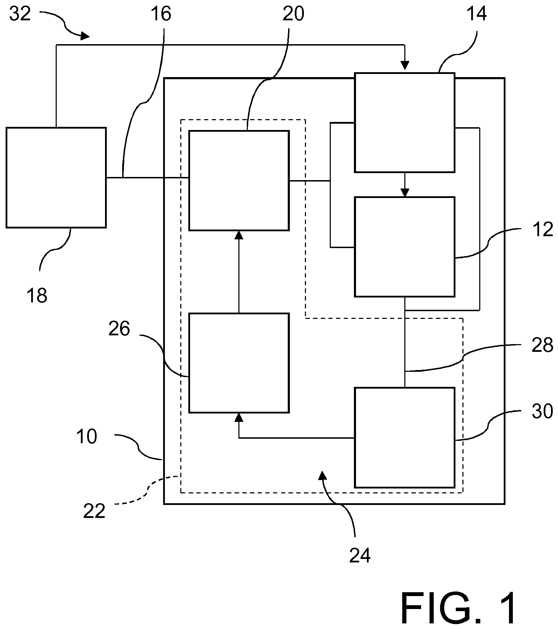

Die Fig. 1 zeigt in einer schematischen Darstellung eine elektrische Schaltungsanordnung 10 und eine Spannungsversorgung zur Versorgung der elektrischen Komponenten 12, 14 der Schaltungsanordnung 10.

Die hier gezeigte elektrische Schaltungsanordnung 10 weist eine logische Schaltungseinrichtung 12 als erste elektrische Komponente, und eine Schnittstelle 14 als zweite elektrische Komponente der Schaltungsanordnung 10 auf. Selbstverständlich kann die Schaltungsanordnung 10 alternativ oder zusätzlich zu der Schnittstelle 14 auch andere (hier nicht gezeigte) Komponenten aufweisen. Die Komponenten (logische Schaltungseinrichtung 12 und Schnittstelle 14) sind über einen verzweigten Versorgungspfad 16 der Schaltungsanordnung 10 mit einer die Schaltungsanordnung 10 mit Spannung versorgenden Spannungsversorgung 18 verbunden. In einem unverzweigten Abschnitt des Versorgungspfades 16 ist ein Schalter 20 einer Schaltvorrichtung 22 der Schaltungsanordnung 10 angeordnet. Dieser Schalter 20 ist der Hauptschalter der Schaltungsanordnung 10 oder zumindest der darin integrierten logischen Schaltungseinrichtung 12.

Die Schaltvorrichtung 22 weist neben dem Schalter 20 weiterhin einen Ansteuerpfad 24 auf, der den Schalter 20 mit einer in der logischen Schaltungseinrichtung 12 implementierte Fehlererkennungs-Einheit (nicht gezeigt) verbindet. Im Ansteuerpfad 24 ist eine den Schalter 20 ansteuerde Ansteuerschaltung 26 angeordnet, die über mindestens eine Steuerleitung 28 mit der in der logischen Schaltungseinrichtung 12 implementierten Fehlererkennungs-Einheit verbunden ist. In der Steuerleitung 28 ist eine Trennstrecke 30 angeordnet.

Somit ist diese Fehlererkennungs-Einheit zum Ansteuern des Unterbrechens des Versorgungspfades 16 durch den Schalter 20 in Abhängigkeit der mindestens einen Fehlfunktion über den Ansteuerpfad 24 mit besagtem Schalter 20 signaltechnisch verbunden.

Durch das Unterbrechen des Versorgungspfades 16 bei Erkennen einer Fehlfunktion kommt es zum Abschalteng der logischen Schaltungseinrichtung (Logikschaltung). Im Fehlerfall können somit Folgefehler oder eine Summierung der Fehler vermieden werden. Dadurch wird im Fehlerfall eine Erhöhung der Sicherheit der logischen Schaltungseinrichtung und der (Schutz-)Schaltungsanordnung, in der diese Schaltungseinrichtung verbaut ist, erreicht.

Der ansteuerbare Schalter 20 ist über einen weiteren Ansteuerpfad 32 auch zum Wiederherstellen des Versorgungspfades 16 ansteuerbar. Über diesen weiteren Ansteuerpfad 32 kann bei Beginn der Spannungsversorgung und/oder nach einer Unterbrechung des Versorgungspfades 16 durch den ansteuerbaren Schalter 20 und einem anschließenden Rücksetzvorgang (Reset) der Spannungsversorgung 18 die Schaltungsanordnung 10 und die darin integrierte logische Schaltungseinrichtung 12 in Betrieb bzw. wieder in Betrieb genommen werden.

Dabei ist der weitere Ansteuerpfad 32 über die Schnittstelle 14 der Schaltungseinrichtung 10 geführt, an die zur Ansteuerung des Wiederherstellens des Versorgungspfades 16 ein Steuerausgang der Spannungsversorgung 18 anschließbar ist.

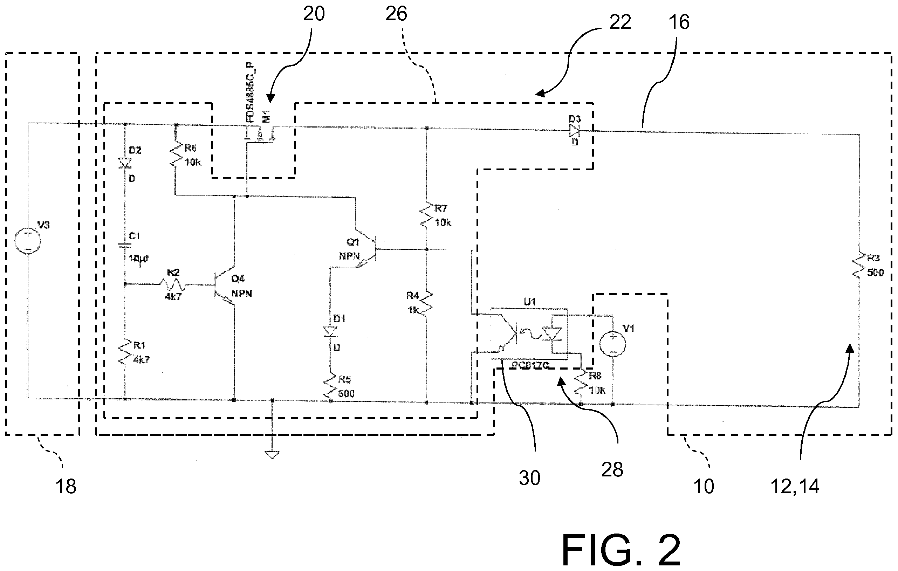

Die Fig. 2 zeigt ein Ersatzschaltbild zur SPICE-Simulation der Schaltvorrichtung 22 der Schaltungsanordnung 10. Die Spannungsversorgung 20 wird dabei mittels einer Spannungsquelle V3 simuliert. Das in die Steuerleitung 28 des Ansteuerpfades 24 eingespeiste Ausgangssignal der Fehlererkennungs-Einheit wird mittels der Spannungsquelle V1 simuliert. Die Unabhängigkeit der Bezugspotentiale von der Spannungsversorgung 18 (Spannungsquelle V3) und dem Ausgangssignal der Fehlererkennungs-Einheit (Spannungsquelle V1) ist mittels des ohmschen Widerstands R8 angedeutet. Der Lastwiderstand der Schaltungsanordnung 10 beziehungsweise der elektrischen Komponenten 12, 14 dieser Schaltungsanordnung 10 wird durch den ohmschen Widerstand R3 simuliert.

Der Schalter 20 ist als Leistungs-MOSFET mit Trech-Technologie ausgebildet (beispielsweise als FDS4885C - Dual N & P-Channel PowerTrench MOSFET), die Trennstrecke 30 in der Steuerleitung 28 als Optokoppler. Die Ansteuerschaltung 26 ist mittels Bipolar-Transistoren Q1, Q4 realisiert.

Die Simulation zeigt die zuverlässige Wirkungsweise der Schaltungsanordnung 10.

### Bezugszeichenliste

- Elektrische Schaltungsanordnung: 10
- logische Schaltungseinrichtung: 12
- Schnittstelle: 14
- Versorgungspfad: 16
- Spannungsversorgung: 18
- Schalter: 20
- Schaltvorrichtung: 22
- Ansteuerpfad: 24
- Ansteuerschaltung: 26
- Steuerleitung: 28
- Trennstrecke: 30
- Weiterer Ansteuerpfad: 32

## Patentansprüche

1. Elektrische Schaltungsanordnung (10) zum Schutz einer logischen Schaltungseinrichtung (12) dieser Schaltungsanordnung (10), mit einem Versorgungspfad (16) zum elektrischen Verbinden der logischen Schaltungseinrichtung (12) mit einer Spannungsversorgung (18) und mindestens einer in der als FPGA oder Mikrocontroller ausgebildeten logischen Schaltungseinrichtung (12) implementierten Fehlererkennungs-Einheit zum Erkennen von mindestens einer Fehlfunktion der Schaltungsanordnung (10), insbesondere einer Fehlfunktion der logischen Schaltungseinrichtung (12), **dadurch gekennzeichnet, dass** in dem Versorgungspfad (16) ein ansteuerbarer Schalter (20) zum Unterbrechen des Versorgungspfades (16) und damit zum Trennen der logischen Schaltungseinrichtung (12) von der Spannungsversorgung (18) angeordnet ist, wobei die Fehlererkennungs-Einheit -zum Ansteuern des Unterbrechens des Versorgungspfades (16) durch den Schalter (20) in Abhängigkeit der mindestens einen Fehlfunktion- über einen Ansteuerpfad (24) mit diesem Schalter (20) signaltechnisch verbunden ist.

2. Schaltungsanordnung nach Anspruch 1, wobei im Ansteuerpfad (24) eine Ansteuerschaltung (26) zum Ansteuern des Schalters (20) angeordnet ist, die über mindestens eine Steuerleitung (28) signaltechnisch mit der Fehlererkennungs-Einheit verbunden ist.

3. Schaltungsanordnung nach Anspruch 2, wobei in der Steuerleitung (28) oder in mindestens einer der Steuerleitungen (28) eine Trennstrecke (30) angeordnet ist.

4. Schaltungsanordnung nach einem der vorhergehenden Ansprüche, wobei mindestens eine weitere Schaltungseinrichtung der Schaltungsanordnung (10) über den mittels des Schalters (20) unterbrechbaren Versorgungspfad (16) mit Spannung versorgt wird.

5. Schaltungsanordnung nach einem der vorhergehenden Ansprüche, wobei mindestens eine Schnittstelle (14) der Schaltungsanordnung (10) über den mittels des Schalters (20) unterbrechbaren Versorgungspfad (16) mit Spannung versorgt wird.

6. Schaltungsanordnung nach Anspruch 5, wobei die logische Schaltungseinrichtung (12) signaltechnisch mit der Schnittstelle (14) verbunden ist.

7. Schaltungsanordnung nach Anspruch 5 oder 6, wobei die Fehlererkennungs-Einheit zum Erkennen von Fehlfunktionen der Schnittstelle (14) eingerichtet ist.

8. Schaltungsanordnung nach einem der vorhergehenden Ansprüche, wobei der ansteuerbare Schalter (20) über den einen Ansteuerpfad (24) und/oder über einen weiteren Ansteuerpfad (32) auch zum Wiederherstellen des Versorgungspfades (16) ansteuerbar ist.

9. Schaltungsanordnung nach Anspruch 8, wobei der weitere Ansteuerpfad (32) über die Schnittstelle (14) oder eine der Schnittstellen der Schaltungseinrichtung (10) geführt ist, an die zur Ansteuerung des Wiederherstellens des Versorgungspfades (16) ein Steuerausgang der Spannungsversorgung (18) anschließbar ist.

10. Schaltungsanordnung nach einem der vorhergehenden Ansprüche, wobei die logische Schaltungseinrichtung (12) als Steuer- und/oder Regelvorrichtung ausgebildet ist.

11. Schaltungsanordnung nach einem der vorhergehenden Ansprüche, wobei der Versorgungspfad (16) ein Hauptversorgungspfad der Schaltungsanordnung (10) ist, der sämtliche elektrische Komponenten der Schaltungsanordnung (10) mit Spannung versorgt.

## Claims

1. An electrical circuit assembly (10) for protecting a logic circuit device (12) of this circuit assembly (10), comprising a supply path (16) for electrically connecting the logic circuit device (12) to a voltage supply (18) and at least one fault-detection unit implemented in the logic circuit device (12) configured as an FPGA or microcontroller for detecting at least one malfunction of the circuit assembly (10), in particular a malfunction of the logic circuit device (12), **characterised in that** an actuatable switch (20) for interrupting the supply path (16) and thus for disconnecting the logic circuit device (12) from the voltage supply (18) is arranged in the supply path (16), wherein the fault-detection unit, so as to be able to actuate the interruption of the supply path (16) by means of the switch (20) in dependence of the at least one malfunction, is connected to said switch (20) for signal exchange via an actuation path (24).

2. The circuit assembly according to claim 1, wherein an actuation circuit (26) for actuating the switch (20) is arranged in the actuation path (24) and is connected to the fault-detection unit for signal exchange via at least one control line (28).

3. The circuit assembly according to claim 2, wherein an isolating distance (30) is arranged in the control line (28) or in at least one of the control lines (28).

4. The circuit assembly according to any one of the preceding claims, wherein at least one further circuit device of the circuit assembly (10) is supplied with voltage via the supply path (16) that can be interrupted by means of the switch (20).

5. The circuit assembly according to any one of the preceding claims, wherein at least one interface (14) of the circuit assembly (10) is supplied with voltage via the supply path (16) that can be interrupted by means of the switch (20).

6. The circuit assembly according to claim 5, wherein the logic circuit device (12) is connected to the interface (14) for signal exchange.

7. The circuit assembly according to claim 5 or 6, wherein the fault detection unit is designed to detect malfunctions of the interface (14).

8. The circuit assembly according to any one of the preceding claims, wherein the actuatable switch (20) can be actuated via the actuation path (24) and/or via a further actuation path (32) also so as to reinstate the supply path (16).

9. The circuit assembly according to claim 8, wherein the further actuation path (32) is guided via the interface (14) or one of the interfaces of the circuit device (10), to which a control output of the voltage supply (18) can be connected in order to actuate the reinstatement of the supply path (16) .

10. The circuit assembly according to any one of the preceding claims, wherein the logic circuit device (12) is formed as an open-loop and/or closed-loop control device.

11. The circuit assembly according to any one of the preceding claims, wherein the supply path (16) is a main supply path of the circuit assembly (10) which supplies voltage to all electrical components of the circuit assembly (10).

## Revendications

1. Agencement de circuit électrique (10) destiné à la protection d'une unité de circuit logique (12) de cet agencement de circuit (10), doté d'un chemin d'alimentation (16) pour la connexion électrique de l'unité de circuit logique (12) avec une alimentation en tension (18) et au moins une unité de détection d'erreurs mise en oeuvre dans l'unité de circuit logique (12) conçue sous la forme d'un circuit logique programmable FGPA ou d'un microcontrôleur, pour la détection d'au moins une fonction d'erreur de l'agencement de circuit (10), en particulier, une fonction d'erreur de l'unité de circuit logique (12), **caractérisé en ce qu'**un commutateur (20) pouvant être commandé est disposé dans le chemin d'alimentation (16) pour interrompre le chemin d'alimentation (16), et par conséquent, pour séparer l'unité de circuit logique (12) de l'alimentation en tension (18), où l'unité de détection d'erreurs est reliée par une technique de signalisation avec le commutateur (20) pour le démarrage de l'interruption du chemin d'alimentation (16) par ce commutateur (20) en fonction de l'au moins une fonction d'erreur par le biais d'un chemin de démarrage (24).

2. Agencement de circuit selon la revendication 1, dans lequel, dans le chemin de démarrage (24), un commutateur de démarrage (26) est disposé pour le démarrage du commutateur (20), qui est relié par une technique de signalisation avec l'unité de détection d'erreurs (28) par le biais d'au moins une ligne de commande (28).

3. Agencement de circuit selon la revendication 2, dans lequel un trajet de séparation (30) est disposé dans la ligne de démarrage (28) ou dans au moins une des lignes de démarrage (28) .

4. Agencement de circuit selon l'une des revendications précédentes, dans lequel au moins une autre unité de circuit de l'agencement de circuit (10) est alimentée en tension par le biais du chemin d'alimentation (16) pouvant être interrompu au moyen du commutateur (20).

5. Agencement de circuit selon l'une des revendications précédentes, dans lequel au moins une interface (14) de l'agencement de circuit (10) est alimentée en tension par le biais du chemin d'alimentation (16) pouvant être interrompu au moyen du commutateur (20).

6. Agencement de circuit selon la revendication 5, dans lequel l'unité de circuit logique (12) est reliée par une technique de signalisation avec l'interface (14).

7. Agencement de circuit selon la revendication 5 ou 6, dans lequel l'unité de détection d'erreurs est conçue pour la détection de fonctions d'erreurs de l'interface (14).

8. Agencement de circuit selon l'une des revendications précédentes, dans lequel le commutateur (20) pouvant être commandé peut être démarré également pour le rétablissement du chemin d'alimentation (16) par le biais du chemin de démarrage (24) et/ou par le biais d'un autre chemin de démarrage (32).

9. Agencement de circuit selon la revendication 8, dans lequel l'autre chemin de démarrage (32) est piloté par le biais de l'interface (14) ou de l'une des interfaces de l'unité de circuit (10), auquel peut être joint une sortie de démarrage de l'alimentation de tension (18) pour le démarrage du rétablissement du chemin d'alimentation (16).

10. Agencement de circuit selon l'une des revendications précédentes, dans lequel l'unité de circuit logique (12) est conçue sous la forme d'un dispositif de commande et/ou de réglage.

11. Agencement de circuit selon l'une des revendications précédentes, dans lequel le chemin d'alimentation (16) est un chemin d'alimentation principale de l'agencement de circuit (10) qui alimente toutes les composantes électriques de l'agencement de circuit (10).
